(19) 

Europäisches
Patentamt
European
Patent Office
Office européen
des brevets

(11) **EP 4 560 044 A1**

(12) **EUROPEAN PATENT APPLICATION**
published in accordance with Art. 153(4) EPC

(43) Date of publication:
**28.05.2025 Bulletin 2025/22**

(51) International Patent Classification (IPC):
*C22C 38/38* (2006.01)   *C22C 38/02* (2006.01)
*C22C 38/06* (2006.01)   *C22C 38/22* (2006.01)
*C22C 38/00* (2006.01)   *C22C 38/28* (2006.01)
*C22C 38/26* (2006.01)   *C22C 38/24* (2006.01)
*C22C 38/32* (2006.01)   *C21D 8/02* (2006.01)

(21) Application number: **23843450.0**

(22) Date of filing: **13.07.2023**

(52) Cooperative Patent Classification (CPC):
**B21C 47/02; C21D 8/02; C22C 38/00; C22C 38/02;
C22C 38/06; C22C 38/22; C22C 38/24;
C22C 38/26; C22C 38/28; C22C 38/32; C22C 38/38**

(86) International application number:
**PCT/KR2023/095030**

(87) International publication number:
**WO 2024/019604 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.07.2022 KR 20220088209**

(71) Applicant: **POSCO Co., Ltd
Pohang-si, Gyeongsangbuk-do 37859 (KR)**

(72) Inventors:
• **KIM, Sung-Il
Gwangyang-si, Jeollanam-do 57807 (KR)**
• **YI, Il-Cheol
Gwangyang-si, Jeollanam-do 57807 (KR)**
• **LEE, Je-Woong
Gwangyang-si, Jeollanam-do 57807 (KR)**

(74) Representative: **Meissner Bolte Partnerschaft
mbB
Patentanwälte Rechtsanwälte
Postfach 86 06 24
81633 München (DE)**

(54) **HOT-ROLLED STEEL SHEET AND MANUFACTURING METHOD THEREFOR**

(57)   A hot-rolled steel sheet and a manufacturing method therefor are provided. The hot-rolled steel sheet of the present invention comprises, in wt%, 0.03-0.08% of C, 0.01-1.0% of Si, 1.0-2.0% of Mn, 0.01-0.1% of Sol.Al, 0.005-0.5% of Cr, 0.005-0.3% of Mo, 0.001-0.05% of P, 0.001-0.01% of S, 0.001-0.01% of N, 0.005-0.12% of Ti, 0.005-0.06% of Nb, 0.005-0.2% of V, 0.0003-0.003% of B, and the balance being Fe and inevitable impurities, and satisfies relational formula 1-2.

EP 4 560 044 A1

FIG. 1

**Description**

Technical Field

The present disclosure relates to manufacturing of a high-strength hot-rolled steel sheet mainly used for members, lower arms, reinforcing materials, and connecting materials of automobile chassis components, and more particularly, to a high-strength hot-rolled steel sheet having an excellent tensile strength of 590 MPa or more and an excellent hole expanding ratio of specimen with machined hole ($HER_0$) of 100% or more so that an HER value, which is actual burring formability, satisfies a product of tensile strength $\times$ HER of 45,000 (MPa%) or more even in a wide range of punching clearance from 5 to 20%, and a manufacturing method therefor.

Background Art

In general, conventional technologies have been proposed to manufacture a high-strength hot-rolled steel sheet for a chassis component as a two-phase complex phase steel with a mixed structure of ferrite and bainite as a matrix to improve formability, to thereby improve stretch-flangeability, or manufacture high-strength, high-burring steel with a ferrite phase or a bainite phase as a matrix.

In patent document 1, steel was maintained in a ferrite transformation region for several seconds under specific cooling conditions immediately after hot rolled, and then coiled at a bainite formation temperature so that bainite was formed. By doing so, a metal structure was formed as a mixed structure of polygonal ferrite and bainite, thereby simultaneously securing strength and stretch-flangeability. In addition, patent document 2 proposed high-burring steel with a C-Si-Mn component system and bainitic ferrite and granular bainitic ferrite as a matrix, and patent document 3 proposed a technology of improving stretch-flangeability by manufacturing a small number of grains that have a bainite phase of 95% or more and are stretched in a rolling direction. However, patent document 1 proposed a technology of excessively using Si to delay pearlite formation and facilitate a formation of a bainite phase, which is not suitable for manufacturing high-strength steel because surface quality is inferior, such as red scale defects, and a fraction of a ferrite phase as a soft phase, is 90% or more.

Patent document 2 proposed a technology of using bainitic ferrite and granular bainitic ferrite, which are low-temperature ferrite phases, as a matrix, but since Cu is used to secure additional strength, surface defects and high-temperature brittleness may occur, and since Ni should be added to prevent this, it lacks economic viability.

In addition, high-temperature rolling should be performed to form finer stretched grains, and cooling should be performed at an excessively high cooling rate to manufacture a bainite phase as a matrix so that patent document 3 has a problem in that a local cooling rate difference is likely to occur, and the shape quality of a rolled plate is likely to be inferior.

In addition, alloy components such as Si, Mn, Mo, Cr, Cu, and Ni, which are mainly used to manufacture the high-strength steels described above, are effective in improving the strength and stretch-flangeability of the hot-rolled steel sheet, but when a large amount of alloy components are added to improve these properties, segregation of the alloy components and non-uniformity of the microstructure occur, resulting in inferior stretch-flangeability. In particular, steels with high hardenability are sensitive to changes in microstructure when cooled to make a low-temperature transformation structure non-uniform, making it difficult to obtain higher stretch-flangeability.

[Related Art Document]

[Patent Document]

(Patent Document 1) Japanese Patent Laid-Open Publication No. 1994-293910
(Patent Document 2) Korean Patent No. 10-1114672
(Patent Document 3) Korean Patent Laid-Open Publication No. 2013-0080038

Summary of Invention

Technical Problem

An aspect of the present disclosure is to provide a hot-rolled steel sheet having an excellent tensile strength of 590 MPa or more and an excellent $HER_0$ of 100% or more so that an HER value, which is actual burring formability, satisfies a product of tensile strength $\times$ HER of 45,000 (MPa%) or more even in a wide range of punching clearance from 5 to 20%, and a manufacturing method therefor.

In addition, technical problems to be achieved by the present disclosure are not limited to the above-mentioned objects. That is, other objects that are not mentioned may be obviously understood by those skilled in the art to which the present disclosure pertains from the following description.

Solution to Problem

According to an aspect of the present disclosure, a hot-rolled steel sheet includes:

in wt%, 0.03 to 0.08% of C, 0.01 to 1.0% of Si, 1.0 to 2.0% of Mn, 0.01 to 0.1% of Sol.Al, 0.005 to 0.5% of Cr, 0.005 to 0.3% of Mo, 0.001 to 0.05% of P, 0.001 to 0.01% of S, 0.001 to 0.01% of N, 0.005 to 0.12% of Ti, 0.005 to 0.06% of Nb, 0.005 to 0.2% of V, 0.0003 to 0.003% of B, and the balance being Fe and inevitable impurities, in which the hot-rolled steel sheet satisfies relational formula 1 and relational formula 2, and
a microstructure includes a ferritic low-temperature transformation phase, which comprising at least one of acicular ferrite, granular bainitic ferrite, and bainitic ferrite, as a main phase, and includes less than 40% of bainite phase and polygonal ferrite phase in total, and less than 3% of the residual pearlite, martensite, retained austenite, and MA phases in total, and a geometrical necessary dislocation of the microstructure satisfies a range of $1.0 \times 10^{14}$ to $2.5 \times 10^{14}$ m$^{-2}$.

$$[Relational\ Formula\ 1]$$

$$0.2 \leq X \leq 0.6$$

X = (Nb/93+Ti*/48+V/51)/(C/12+N/14)

Ti* = Ti-3.42N-1.5S

In the above relational formula 1, Nb, Ti, C, N, and S are wt% of the corresponding alloy elements, and 0 is substituted if not added.

$$[Relational\ Formula\ 2]$$

$$1.5 \leq T \leq 3.5$$

T = [Mn]+2.8[Mo]+1.5[Cr]+500[B]
In the above relational formula 2, Mn, Mo, Cr, and B are wt% of the corresponding alloy elements, and 0 is substituted if not added.
Tensile strength may be 590 MPa or more, and an HER value may satisfy a product of tensile strength × HER of 45,000 MPa% or more in a range of punching clearance from 5 to 20%.
According to another aspect of the present disclosure, a manufacturing method for a hot-rolled steel sheet includes:

reheating a steel slab to 1150 to 1350°C, the steel slab containing, in wt%, 0.03 to 0.08% of C, 0.01 to 1.0% of Si, 1.0 to 2.0% of Mn, 0.01 to 0.1% of Sol.Al, 0.005 to 0.5% of Cr, 0.005 to 0.3% of Mo, 0.001 to 0.05% of P, 0.001 to 0.01% of S, 0.001 to 0.01% of N, 0.005 to 0.12% of Ti, 0.005 to 0.06% of Nb, 0.005 to 0.2% of V, 0.0003 to 0.003% of B, and the balance being Fe and inevitable impurities, and satisfying relational formula 1 and relational formula 2;
hot-rolling the reheated steel slab at a temperature in a range of 850 to 1150°C;
primarily cooling the hot-rolled steel sheet to a temperature in the range of 400 to 500°C at an average cooling rate of 50 to 100°C/sec;
recuperating the steel sheet to a temperature in a range of 450 to 550°C by maintaining the first-cooled steel sheet for 0.5 to 3 seconds;
secondarily cooling the recuperated steel sheet to a temperature in a range of 400 to 500°C at an average cooling rate of 1 to 30°C/sec, and then coiling the cooled steel sheet; and
cooling the coiled coil to a temperature ranging from room temperature to 200°C at an average cooling rate of 0.1 to 25°C/hour,
in which, in at least one of the primary cooling process and the secondary cooling process, cooling is completed so that a temperature $T_E$ at both edge portions (W × 60%) of the entire width W of the steel sheet is 450 to 550°C, and a temperature $T_C$ at the central portion (W × 40%) of the width is 400 to 500°C, and as a result, an average temperature $T_A$ of the coil after coiled in the coiling is maintained in the range of 400 to 500°C.

$$[\text{Relational Formula 1}]$$

$$0.2 \leq X \leq 0.6$$

X = (Nb/93+Ti*/48+V/51)/(C/12+N/14)

Ti* = Ti-3.42N-1.5S

In the above relational formula 1, Nb, Ti, C, N, and S are wt% of the corresponding alloy elements, and 0 is substituted if not added.

$$[\text{Relational Formula 2}]$$

$$1.5 \leq T \leq 3.5$$

T = [Mn]+2.8[Mo]+1.5[Cr]+500[B]
In the above relational formula 2, Mn, Mo, Cr, and B are wt% of the corresponding alloy elements, and 0 is substituted if not added.

Advantageous Effects of Invention

According to an aspect of the present disclosure having the above-described configuration, it is possible to effectively provide a high-strength steel sheet having an excellent tensile strength of 590 MPa or more and an excellent $HER_0$ of 100% or more by controlling a steel microstructure and geometrical necessary dislocation so that an HER value, which is actual burring formability, satisfies a product of tensile strength × HER of 45,000 (MPa%) or more even in a wide range of punching clearance from 5 to 20%.

Brief Description of Drawings

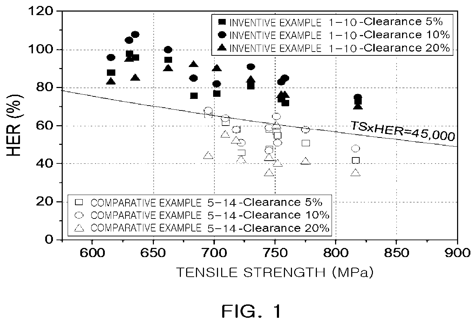

FIG. 1 is a graph illustrating an HER relationship according to punching clearance of Inventive Examples 1 to 10 and Comparative Examples 5 to 14 in an embodiment of the present disclosure.

Best Mode for Invention

Hereinafter, the present disclosure will be described.
In order to solve the problems of the above-described related art, the inventors of the present disclosure investigated the changes in local formability and hole expanding ratio (HER) according to characteristics of components, manufacturing process, and microstructure for various steels with different components and microstructures. As a result, it was confirmed that detailed features of each component were correlated to the local formability and hole expanding ratio, and from this, the following relational formula 1 and relational formula 2 were derived. It was confirmed based on the derived relational formulas that the microstructure of the steel includes a ferritic low-temperature transformation phase as a main phase, and includes less than 40% of bainite phase and polygonal ferrite phase in total, 10% or more of polygonal ferrite, and less than 3% of the residual pearlite, martensite, and MA phases in total, and when a geometrical necessary dislocation value satisfies a range of $1.0 \times 10^{14}$ to $2.5 \times 10^{14}$ m$^{-2}$, since the tensile strength is excellent at 590 MPa or more and $HER_0$ is excellent at 100% or more, an HER value, which is actual burring formability, satisfies a product of tensile strength × HER of 45,000 MPa% or more even in a wide range of punching clearance from 5 to 20%, and thus, the present disclosure is proposed.
Hereinafter, compositions of a hot-rolled steel sheet of the present disclosure and the reasons for the restriction of its content are explained. Herein, "%" means wt% unless otherwise specified.

C: 0.03 to 0.08%

The C is the most economical and effective element for strengthening steel and has a great influence on a

# EP 4 560 044 A1

hardness value of each component phase. When the amount of C added increases, hardenability increases, and fractions of hard phases such as bainite and martensite in a microstructure increases, thereby increasing the tensile strength. In addition, fine precipitates are formed together with Ti and Nb, which have a high affinity with C, so both the yield strength and tensile strength increase by precipitation strengthening. However, when the content of C is less than 0.03%, it is difficult to obtain a sufficient strengthening effect, and when the content of C exceeds 0.08%, the hardness of each phase including the bainite and martensite phases increases, which causes problems such as excessive increase in strength and a decrease in formability, and also causes inferior weldability. Therefore, the content of C is preferably in a range of 0.03 to 0.08%. In order to stably secure the targeted strength and formability in the present disclosure, it is more preferable to limit the content of C to 0.04 to 0.07%.

Si: 0.01 to 1.0%

The above Si deoxidizes molten steel, has a solid-solution strengthening effect, and is advantageous in improving formability by delaying the formation of coarse carbides. In order to obtain this effect in the present disclosure, it is preferable that the content of Si is included at 0.01% or more. However, when the content of Si exceeds 1.0%, a red scale is formed on a surface of a steel sheet due to the Si, which not only results in inferior surface quality of the steel sheet but also inferior ductility and weldability. As a result, it is preferable to limit the content of Si to 1.0% or less.

Mn: 1.0 to 2.0%

Like the Si, the Mn is an element that is effective in strengthening a solid solution of steel and increases the hardenability of steel, thereby facilitating the formation of bainite phase and martensite phase which are hard phases, during cooling after hot rolling. However, when the content of Mn is less than 1.0%, the above effect due to addition may not be obtained, and when the content of Mn exceeds 2.0%, hardenability increases significantly, so that the hardness of each phase including the bainite phase and the martensite phase increases, resulting in problems such as the excessive increase in strength and the decrease in formability, and in a casting process, a segregation portion is greatly developed in a central portion of a thickness when a slab is cast, and during cooling after hot rolling, a microstructure is formed non-uniformly in a thickness direction, resulting in inferior stretch-flangeability. In particular, it becomes difficult to uniformly manufacture the microstructure during cooling in a full length and full width of a hot-rolled sheet. More preferably, the upper limit of the content of Mn is limited to 1.8%.

Sol.Al: 0.01 to 0.1%,

The Sol.Al is a component mainly added for deoxidation, and when the content of Sol.Al is less than 0.01%, the effect of the addition is insufficient, and when the content of Sol.Al exceeds 0.1%, the Sol.Al combines with nitrogen to form AlN, which easily causes corner cracks in the slab during casting and easily causes defects due to the formation of inclusions. Accordingly, it is preferable to limit the content of Sol.Al to 0.01 to 0.1%, and more preferable to limit the upper limit of the amount of Sol.Al added to 0.06%.

Cr: 0.005 to 0.5%

The Cr is an element that strengthens a solid solution of steel and delays the ferrite phase transformation during cooling, thereby helping the formation of bainite. However, when the amount of Cr added is less than 0.005%, the effect of the addition may not be obtained, and when the amount of Cr added exceeds 0.5%, the ferrite transformation is excessively delayed, resulting in inferior elongation due to the formation of the martensite phase. Also, similar to the Mn, the segregation portion in the central portion of the thickness is greatly developed, and the microstructure in the thickness direction becomes non-uniform, resulting in inferior stretch-flangeability. More preferably, the upper limit of the content of Cr is limited to 0.3%.

Mo: 0.005 to 0.3%

Mo increases the hardenability of the steel and facilitates the formation of the bainite structure. However, when the amount of Mo added is less than 0.005%, the above effect due to the addition may not be obtained, and when the amount of Mo added exceeds 0.3%, the martensite phase is formed due to the excessive increase in hardenability, thereby rapidly decreasing the formability. In addition, it is economically disadvantageous and is detrimental to weldability. Therefore, it is preferable to limit the content of Mo to 0.005 to 0.3%. It is more preferably to limit the content of Mo to a range of 0.05 to 0.2%.

5

P: 0.001 to 0.05%

Like Si, the P has the effect of strengthening a solid solution and accelerating ferrite transformation at the same time. However, in order to control the content of P to less than 0.001%, it is economically disadvantageous because it requires a lot of manufacturing cost and is insufficient to obtain the strength. On the other hand, when the content of P exceeds 0.05%, brittleness occurs due to grain boundary segregation, micro-cracks are likely to occur during forming, and ductility, stretch-flangeability, and impact resistance significantly decrease. Therefore, it is preferable to limit the content of P to 0.005 to 0.05%.

S: 0.001 to 0.01%

The S is an inevitable impurity existing in steel. When the content of S exceeds 0.01%, the S combines with Mn, etc., to form non-metallic inclusions, and accordingly, there is a problem that micro-cracks are likely to occur during cutting processing of the steel and that the stretch flangeability and impact resistance significantly decreases. In the present disclosure, there is no particular limitation on the lower limit of the content of S, but in order to manufacture the content of S to less than 0.001%, it takes a lot of time during steelmaking, which reduces productivity. As a result, considering this, the lower limit of the content of S may be limited to 0.001%. Therefore, in the present disclosure, it is preferable to limit the content of S to 0.001 to 0.01%, and more preferable to limit the upper limit of the content of S to 0.005%.

N: 0.001 to 0.01%

The N is a representative solid-solution strengthening element along with C, and forms coarse precipitates with Ti, Al, etc. In general, the solid-solution strengthening effect of N is superior to that of C, but there is a problem that the toughness decreases significantly as the amount of N increases in the steel. On the other hand, in order to control the content of N to less than 0.001%, it takes a lot of time during the steelmaking process, which reduces productivity. Therefore, in the present disclosure, it is preferable to limit the content of N to 0.001 to 0.01%.

Ti: 0.005 to 0.12%

The Ti is a representative precipitation strengthening element along with Nb and V, and forms coarse TiN with a strong affinity with N. The TiN has the effect of suppressing grain growth during the heating process for hot rolling. In addition, the remaining Ti after reacting with N is solid-solved in the steel to combine with carbon to form TiC precipitates, which is a useful component for improving the strength of the steel. However, when the content of Ti is less than 0.005%, the above effect may not be obtained, and when the content of Ti exceeds 0.12%, there is a problem that the stretch-flangeability is inferior during forming due to the occurrence of coarse TiN and the coarsening of precipitates. Therefore, in the present disclosure, it is preferable to limit the content of Ti to 0.001 to 0.12%. It is more preferably to limit the content of Ti to a range of 0.045 to 0.11%.

Nb: 0.005 to 0.06%

The Nb is a representative precipitation strengthening element along with Ti and V, and is effective in improving the strength and impact toughness of steel by being precipitated during the hot rolling and refining grains due to the recrystallization delay. However, when the content of Nb is less than 0.005%, the above effect may not be obtained, and when the content of Nb exceeds 0.06%, there is a problem that the stretch-flangeability is inferior by the formation of stretched grains and the formation of coarse composite precipitates due to the excessive recrystallization delay during the hot rolling. Therefore, in the present disclosure, it is preferable to limit the content of Nb to 0.005 to 0.06%.

V: 0.005 to 0.2%

The V is a representative precipitation strengthening element along with Nb, and Ti, and hardly precipitates during the hot rolling and serves to form precipitates after coiled to improve the strength of the steel. Therefore, the V is effective in additionally improving the strength without increasing deformation resistance and rolling load due to the recrystallization delay during the hot rolling. In order to obtain this effect in the present disclosure, it is preferable that the content of V is included at 0.005% or more. However, when the content of V is excessive, there is a problem that the stretch-flangeability is inferior due to the formation of coarse precipitates, and it is also economically disadvantageous. Therefore, in the present disclosure, it is preferable to limit the upper limit of the content of V to 0.2%, and more preferable to limit of the content of V to 0.15%.

B: 0.0003 to 0.003%

The B is mainly segregated at grain boundaries when it exists in a solid solution state in steel, and has the effect of improving the brittleness of steel by stabilizing the grain boundaries, and serves to stabilize solid solution N to suppress the formation of coarse AlN nitride. In addition, the B is effective in the formation of hard phases, such as bainite and martensite, by delaying the ferrite phase transformation. In the present disclosure, the above effect is achieved when the content of B is included at 0.0003% or more, and when the content of B exceeds 0.003%, the effect no longer increases, and there is a problem that the ductility decreases and the formability is inferior. Therefore, in the present disclosure, it is preferable to limit the upper limit of the content of B to 0.003%, and more preferable to limit of the content of B to 0.002%.

The remainder other than the above compositions is Fe. However, in a general manufacturing process, unintended impurities may inevitably be mixed from a raw material or the surrounding environment, and thus, these impurities may not be excluded. Since these impurities are known to those skilled in the art, all the contents are not specifically mentioned in the present specification. Meanwhile, addition of effective components other than the compositions described above is not excluded.

Relational Formula 1

Meanwhile, in the present disclosure, in the steel having the component range as described above, it is preferable to control a value of the following relational formula 1 composed of the contents of C, N, S, Nb, Ti, and V from 0.2 or more to 0.6 or less, and more preferable to control the value from 0.3 or more to 0.5 or less.

When an X value of the following relational formula 1 exceeds 0.6, the formation of precipitates increases, so the strength increases somewhat, but the microstructure stretched in the rolling direction is likely to be formed due to the recrystallization delay during the hot rolling, so the elongation in the vertical direction of rolling decreases. In addition, when the hot-rolled steel sheet is cooled, the solid solution C and solid solution N atoms in the untransformed phase are insufficient, so that it is difficult to form the hard phase stably, and the grain boundary becomes weak, resulting in inferior shear plane quality. On the other hand, when the X value is less than 0.2, the grain growth is easy during reheating, the recrystallization is non-uniform during the hot rolling, so the coarse grains are formed locally, and the solid solution C and solid solution N are excessively high, so the hardness value of the hard phase tends to increase, which may ultimately lead to inferior stretch-flangeability.

$$[\text{Relational Formula 1}]$$

$$0.2 \leq X \leq 0.6$$

$X = (Nb/93 + Ti^*/48 + V/51)/(C/12 + N/14)$

$Ti^* = Ti - 3.42N - 1.5S$

In the above relational formula 1, Nb, Ti, C, N, and S are wt% of the corresponding alloy elements, and 0 is substituted if not added.

Relational Formula 2

In addition, in the present disclosure, in the steel having the component range described above, it is preferable to control the value of the following relational formula 2 composed of Mn, Mo, Cr, and B to 1.5 or more and 3.5 or less. The following relational formula 2 is a factorization of a combination of alloy elements that may maintain the formation of bainite and martensite, and MA phases, which are hard phases among the steel microstructures of the present disclosure, at an appropriate level, and as a "T" value of the following relational formula 2 increases, the formation of the bainite and martensite, and MA phases, which are hard phases, increases, and hardness values of each hard phase also increase. Therefore, the larger the value, the more advantageous it is for securing strength, but when it is excessive, the ductility of the steel decreases, the difference in hardness between the soft and hard phases increases, which results in inferior stretch-flangeability and an increase in material deviation in the overall length and width of the hot-rolled steel sheet.

$$[\text{Relational Formula 2}]$$

$$1.5 \leq T \leq 3.5$$

T = [Mn]+2.8[Mo]+1.5[Cr]+500[B]

In the above relational formula 2, Mn, Mo, Cr, and B are wt% of the corresponding alloy elements, and 0 is substituted if not added.

Hereinafter, the microstructure of the high-strength hot-rolled steel sheet of the present disclosure is described.

The steel proposed in the present disclosure has a microstructure in which the ferritic low-temperature transformation phase is the main phase, and includes less than 40% of bainite phase and polygonal ferrite phase in total and less than 3% of the residual pearlite, martensite, and MA phases in total, and the geometrical necessary dislocation value of the microstructure satisfies a range of $1.0 \times 10^{14}$ to $2.5 \times 10^{14}$ m$^{-2}$.

When the microstructure of the steel sheet is controlled within the above range proposed in the present disclosure, the targeted tensile strength of 590 MPa or more is secured, and at the same time, the hole expanding ratio of the specimen with machined hole (HER$_0$) is excellent at 100% or more so that the HER value, which is the actual burring formability, may satisfy the product of tensile strength $\times$ HER of 45,000 MPa% or more even in a wide range of punching clearance from 5 to 20%.

However, when the fraction of the bainite phase with high dislocation density among the microstructures composed of the polygonal ferrite phase, the bainite phase, and the ferrite-based low-temperature transformation phase increases and the sum of the fractions of the bainite phase and polygonal ferrite phase exceeds 40%, the elongation decreases significantly, and even if HER$_0$ satisfies 100% or more, the dependence of the shear plane quality on the change in punching clearance increases, so it is difficult to actually satisfy the product of the tensile strength $\times$ HER of 45,000 MPa% or more, In addition, when the fraction of the polygonal ferrite phase among the microstructures increases excessively and the sum of the fractions of the polygonal ferrite phase and the bainite phase exceeds 40%, the strength decreases, so it is difficult to satisfy the targeted strength, and when the punching clearance is large, the occurrence of burrs becomes severe and the HER decreases, so it is difficult for the product of the tensile strength $\times$ HER to satisfy 45,000 MPa% or more. More preferably, the sum of the fractions of the bainite and polygonal ferrite phases is limited to 10 to 40%.

Meanwhile, in the present disclosure, the ferritic low-temperature transformation phase refers to a ferrite-based phase and structure generated by a low-temperature transformation, such as acicular ferrite, granular bainitic ferrite, or bainitic ferrite. These ferritic low-temperature transformation phases are distinguished from the polygonal ferrite in that the grain shape is not equiaxed, the grain boundary is irregular, and the dislocation density is high, and are distinguished from bainite in that iron carbide is not precipitated inside or at the boundary. In addition, the low-temperature transformation phase may include two or more types of phases and structures.

The present disclosure does not specifically limit area ratios of each of the ferrite phase, the bainite phase, and the ferritic low-temperature transformation phase among the microstructure of the steel. However, since the polygonal ferrite helps to form the ductility of the steel and the fine precipitates, it is preferable to limit the area ratio to 10% or more.

In addition, since the bainite is a harder phase than the ferritic low-temperature transformation phase, the increase in the bainite phase leads to the decrease in ductility. As a result, considering this, it is preferable to limit the area ratio of the bainite phase to 20% or less.

In addition, the steel of the present disclosure may include pearlite, martensite, retained austenite, and martensite and austenite (MA) as residual structures in addition to the above-described structures, at less than 3 area%. When the above phases are included alone or in combination at 3 area% or more, the stretch-flangeability of steel greatly deceases, and it may be difficult to satisfy the product of tensile strength $\times$ HER proposed in the present disclosure of 45,000 MPa% or more.

In the present disclosure, the differentiation and area fraction of the polygonal ferrite phase, the bainite phase, the ferritic low-temperature transformation phase, the martensite phase, and the residual austenite phase formed in the steel were measured using Electron Back Scattered Diffraction (EBSD) (JEOL JSM-7001F)), and the area fraction may be measured from the results analyzed at a magnification of 1000 to 3000.

Meanwhile, the above-described ferrite low-temperature transformation phases show high hardness values compared to the polygonal ferrite. In addition, the bainite phase is a phase including fine iron carbides and is a hard phase that has a higher hardness value than the ferrite low-temperature transformation phase. When such phases are formed by being mixed with the soft polygonal ferrite phase, the steel has features showing high strength and a stable HER value. However, since the physical features including various compositional hardness values are greatly dependent on the components that make up the steel, it is difficult to clearly distinguish how excellent the original HER value of the steel is and whether it shows a stable HER value even under changes in punching clearance based on the compositional ratio alone.

Therefore, the present disclosure confirmed that the geometrical necessary dislocation_of the microstructure of the steel is an important factor affecting the balance between the strength and HER value of the steel.

That is, the present disclosure provides the high-strength hot-rolled steel sheet in which *the geometrical necessary dislocation* of the microstructure satisfies $1.0 \times 10^{14}$ to $2.5 \times 10^{14}$ m$^{-2}$. Maintaining the ferritic low-temperature transformation phase matrix and the bainite phase with such a constant dislocation density at a constant level is advantageous in maintaining the high strength, ductility, and HER.

The geometrical necessary dislocation may be calculated using kernel average misorientation (KAM) data measured by the EBSD as shown in the mathematical formula below.

$$GND(m^{-2}) = \frac{2\theta}{ub}$$

Here, θ is average misorientation (KAM values),

u is a unit length (step size in the EBSD measurement),
b is a burgers vector.

For convenience, the calculation may be made using software such as OIM analysis™ (EDAX) that analyzes the EBSD measurement results. Meanwhile, the EBSD measurement was evaluated based on a cross-section parallel to the rolling direction at a 1/4 thickness location of the hot-rolled steel sheet.

Next, the manufacturing method for a high-strength hot-rolled steel sheet of the present disclosure will be described in detail.

The manufacturing method for a hot-rolled steel sheet of the present disclosure includes: reheating a steel slab satisfying the above-described composition and satisfying the relational formula 1 and relational formula 2 to 1150 to 1350°C; hot-rolling the reheated steel slab at a temperature in a range of 850 to 1150°C; primarily cooling the hot-rolled steel sheet to a temperature in the range of 400 to 500°C at an average cooling rate of 50 to 100°C/sec; recuperating the steel sheet to a temperature in a range of 450 to 550°C by maintaining the first-cooled steel sheet for 0.5 to 3 seconds; secondarily cooling the recuperated steel sheet to a temperature in a range of 400 to 500°C at an average cooling rate of 1 to 30°C/sec, and then coiling the cooled steel sheet; and cooling the coiled coil to a temperature ranging from room temperature to 200°C at an average cooling rate of 0.1 to 25°C/hour, and in at least one of the primary cooling process and the secondary cooling process, the cooling is completed so that a temperature $T_E$ at both edge portions (W × 60%) of the entire width W of the steel sheet is 450 to 550°C, and a temperature $T_C$ at the central portion (W × 40%) of the width is 400 to 500°C, so an average temperature $T_A$ of the coil after coiled in the coiling may be maintained in the range of 400 to 500°C.

First, in the present disclosure, the steel slab satisfying the above-described composition and the relational formula 1 and relational formula 2 is reheated to 1150 to 1350°C. In this case, when the reheating temperature is lower than 1150°C, the precipitates are not sufficiently re-dissolved, so the formation of the precipitates decreases in the process after the hot rolling, the coarse TiN remains, and the slab is not sufficiently heated, so it is difficult to control the temperature of the steel sheet at a constant level during the hot rolling. On the other hand, when the reheating temperature it exceeds 1350°C, the strength decreases due to abnormal grain growth of austenite grains, so it is preferable to limit the reheating temperature to 1150 to 1350°C.

Next, in the present disclosure, the reheated steel slab is hot rolled at a temperature in the range of 850 to 1150°C.

The hot rolling is performed at a temperature in the range of 850 to 1150°C. When the hot rolling starts at a temperature higher than 1150°C, the temperature of the hot-rolled steel sheet increases, so the grain size becomes coarse, and the surface quality of the hot-rolled steel sheet is inferior. On the other hand, when the hot rolling is finished at a temperature lower than 850°C, the stretched grains develop due to the excessive recrystallization delay, which leads to severe anisotropy and inferior formability.

In addition, in the present disclosure, the hot-rolled steel sheet is primarily cooled to a temperature in the range of 400 to 500°C at an average cooling rate of 50 to 100°C/s.

As described below, in the present disclosure, after the primary cooling is completed, the hot-rolled steel sheet is subjected to a cooling rest period for a short period of time, and is secondarily cooled and then coiled. Therefore, when the cooling end temperature is excessively low during the primary cooling, an excessive hard phase may be formed in the subsequent process. In particular, when cooled below 400°C, the polygonal ferrite phase in the microstructure is not formed or its area fraction is formed at less than 10%, so the elongation of the steel is significantly insufficient. On the other hand, when cooled exceeding 500°C, the fine precipitates are excessively formed to increase the yield strength, and the solid solution C and solid solution N required for the formation of the hard phase decrease to decrease the area fraction of the bainite phase and make it difficult to secure the targeted strength. Therefore, it is preferable to perform the primary cooling to a temperature of 400 to 500°C.

In addition, it is preferable to set the average cooling rate during the primary cooling to 50 to 100°C/s. When the cooling rate is less than 50°C/sec, the fraction of the polygonal ferrite phase may be formed excessively, which is disadvantageous for securing the strength, and when the cooling rate exceeds 100°C/sec, the polygonal ferrite phase fraction may greatly decrease in the area where the primary cooling end temperature is low, which may result in insufficient elongation.

Next, in the present disclosure, the steel sheet is recuperated to a temperature in the range of 450 to 550°C by maintaining the first-cooled steel sheet for 0.5 to 3 seconds.

That is, the cooling of the first-cooled steel sheet is stopped for 0.5 to 3 seconds, and the temperature of the steel sheet satisfies the temperature in the range of 450 to 550°C due to internal latent heat and transformation heat. In this case, when the cooling stop time is less than 0.5 seconds, the recuperation effect is not effective, and when the cooling stop time exceeds 3 seconds, the fraction of the polygonal ferrite phase in the microstructure significantly increases, and the hard phases as the bainite and bainitic ferrite phases decrease.

In addition, since the temperature of the steel sheet approaches 600°C, the pearlite structure and coarse carbides may be formed in the central portion of the thickness of the high-temperature area, resulting in inferior stretch-flangeability. On the other hand, the excessive cooling occurs in the area where the temperature of the steel sheet is low and approaches 400°C, resulting in insufficient elongation.

Next, in the present disclosure, the recuperated steel sheet is secondarily cooled to a temperature in the range of 400 to 500°C at an average cooling rate of 1 to 30°C/sec, and then coiled.

The end temperature during the secondary cooling is preferably in the range of 400 to 500°C, and more preferably 430 to 480°C. When the secondary cooling end temperature is too high, the bainite may not be sufficiently formed, making it difficult to secure strength, while when the secondary cooling end temperature is too low, the bainite, martensite, and MA phases may be formed in an excessive amount, resulting in inferior ductility and stretch-flangeability of the steel.

In addition, it is preferable to set the average cooling rate during the second cooling to 1 to 30°C/s. When the cooling rate is too high, the MA phase is likely to be formed, and the excessive bainite phase is formed, which reduces the elongation. There is no particular limitation on the lower limit of the cooling rate, but in order to control the cooling rate to less than 1°C/s, separate cooling and heat-retaining equipment, etc., is required, which may be economically disadvantageous. As a result, considering this, the lower limit may be limited to 1°C/s.

Meanwhile, in the present disclosure, in at least one of the primary cooling process and the secondary cooling process, the cooling process are controlled so that the temperature $T_E$ at both edge portions (W × 60%) of the entire width W of the steel sheet is 450 to 550°C and the temperature $T_C$ at the central portion (W × 40%) of the width is 400 to 500°C, and the average temperature $T_A$ of the coil after coiled is controlled to be 400 to 500°C. Here, both the edge portions (W × 60%) are the sum of the width W × 30% of one edge portion and W × 30% of the other edge portion with respect to the entire width W of the steel sheet in the width direction of the steel sheet, and central portion (W × 40%) of the width represents the width size of the central portion of the steel sheet excluding the width size of both the edge portions.

In this case, the $T_E$ and $T_C$ represent the temperature of the steel sheet at each location immediately after the primary cooling and/or secondary cooling described above end. When the temperature $T_E$ at the edge portions is too low, the MA phase and martensite phase are likely to be formed at the edge portions of the coiled coil where the cooling rate after coiled is fast, so both the elongation and stretch-flangeability are inferior. On the other hand, when the temperature $T_C$ at the central portion of the width is too high, the pearlite and coarse carbides are formed at the central portion where the cooling rate of the coil after coiled is very slow, so the shear quality and stretch-flangeability are inferior. Here, the upper limit of $T_E$ and the lower limit of $T_C$ are not specifically limited, but when $T_E$ becomes too high or $T_C$ becomes too low, the standard of the secondary cooling end temperature described above will not be satisfied, so the upper and lower limits may be limited to 550°C and 400°C, respectively.

In addition, in the present disclosure, the steel sheet that is subjected to the secondary cooling is coiled. In this case, the average temperature $T_A$ of the coiled coil may be controlled to be 400 to 500°C.

Thereafter, in the present disclosure, the coiled coil is cooled to a temperature in the range of room temperature to 200°C at an average cooling rate of 0.1 to 25°C/hour.

In this case, when the cooling rate exceeds 25°C/hour, the MA phase is likely to be formed in the steel, so the stretch-flangeability of the steel is inferior, and in order to control the cooling rate to less than 0.1°C/hour, separate heating equipment, etc., are required, which is economically disadvantageous. It is preferable to cool at 1 to 10°C/hour.

In another embodiment, the present disclosure may further include pickling and oiling the steel sheet coiled after the secondary cooling.

The present disclosure may further include heating the pickled and oiled steel sheet to a temperature range of 450 to 740°C and then hot-dip galvanizing the pickled and oiled steel sheet.

In the present disclosure, the hot-dip galvanizing may use a plating bath containing magnesium (Mg): 0.01 to 30 wt%, aluminum (Al): 0.01 to 50 wt%, and the balance being Zn and inevitable impurities.

Mode for Invention

Hereinafter, the present disclosure will be described in more detail through embodiments, but the description of these embodiments is only for illustrating the practice of the present disclosure, and the present disclosure is not limited to the description of these embodiments.

(Inventive Example)

Each steel slab having steel composition components as shown in Table 1 was prepared. Then, each of the prepared steel slabs was used to manufacture a hot-rolled steel sheet under manufacturing conditions shown in Table 2 below. Meanwhile, in Table 2 below, FDT represents a hot rolling temperature, CR1st represents a primary cooling rate, hold time represents a cooling stop time after the primary cooling, MT represents a temperature of the steel sheet before the start of the secondary cooling, and CR2nd represents a second cooling rate. After the primary cooling, the average temperature at both the edge portions of the steel sheet was represented as $T_E$, the average temperature at the central portion of the width after the end of the cooling was represented as $T_C$, and the average temperature of the coiled coil after the end of the secondary cooling was represented as $T_A$. Meanwhile, the coiled coil was cooled from room temperature to 200°C at an average cooling rate of 0.1 to 25°C/hour.

[Table 1]

| Specimen | C | Si | Mn | Cr | Mo | Nb | Ti | V | Al | P | S | N | B | X | T |
|---|---|---|---|---|---|---|---|---|---|---|---|---|---|---|---|
| CS 1 | 0.04 | 0.02 | 1.55 | 0.2 | 0.1 | 0.03 | 0.12 | 0.006 | 0.03 | 0.009 | 0.003 | 0.004 | 0.0006 | 0.708 | 2.430 |
| CS 2 | 0.05 | 0.02 | 1.65 | 0.3 | 0.1 | 0.02 | 0.03 | 0.005 | 0.04 | 0.008 | 0.002 | 0.004 | 0.0006 | 0.133 | 2.680 |
| CS 3 | 0.05 | 0.1 | 1.8 | 0.5 | 0.2 | 0.025 | 0.065 | 0.007 | 0.03 | 0.009 | 0.002 | 0.004 | 0.001 | 0.317 | 3.610 |
| CS 4 | 0.05 | 0.08 | 1.2 | 0.005 | 0.005 | 0.02 | 0.07 | 0.007 | 0.04 | 0.01 | 0.002 | 0.004 | 0.0005 | 0.329 | 1.472 |
| IS 1 | 0.05 | 0.02 | 1.7 | 0.2 | 0.15 | 0.02 | 0.1 | 0.007 | 0.03 | 0.009 | 0.002 | 0.004 | 0.0006 | 0.469 | 2.720 |
| IS 2 | 0.042 | 0.1 | 1.5 | 0.03 | 0.006 | 0.02 | 0.1 | 0.007 | 0.03 | 0.009 | 0.002 | 0.004 | 0.0005 | 0.552 | 1.812 |
| IS 3 | 0.04 | 0.1 | 1.55 | 0.05 | 0.006 | 0.06 | 0.03 | 0.007 | 0.03 | 0.011 | 0.002 | 0.004 | 0.0007 | 0.293 | 1.992 |
| IS 4 | 0.05 | 0.08 | 1.6 | 0.01 | 0.006 | 0.005 | 0.12 | 0.006 | 0.04 | 0.01 | 0.003 | 0.004 | 0.0005 | 0.515 | 1.882 |
| IS 5 | 0.07 | 0.3 | 1.9 | 0.01 | 0.006 | 0.03 | 0.1 | 0.06 | 0.03 | 0.01 | 0.003 | 0.004 | 0.0005 | 0.524 | 2.182 |
| IS 6 | 0.065 | 0.1 | 1.8 | 0.3 | 0.006 | 0.015 | 0.09 | 0.08 | 0.03 | 0.009 | 0.002 | 0.004 | 0.0006 | 0.324 | 2.567 |
| IS 7 | 0.05 | 0.07 | 1.7 | 0.2 | 0.2 | 0.02 | 0.1 | 0.06 | 0.03 | 0.012 | 0.003 | 0.004 | 0.0006 | 0.458 | 2.860 |
| IS 8 | 0.06 | 0.06 | 1.8 | 0.05 | 0.2 | 0.02 | 0.1 | 0.007 | 0.03 | 0.01 | 0.003 | 0.005 | 0.0005 | 0.371 | 2.685 |
| IS 9 | 0.04 | 0.07 | 1.5 | 0.007 | 0.006 | 0.015 | 0.065 | 0.007 | 0.03 | 0.011 | 0.003 | 0.004 | 0.0007 | 0.352 | 1.877 |
| IS 10 | 0.04 | 0.3 | 1.5 | 0.3 | 0.006 | 0.015 | 0.065 | 0.007 | 0.03 | 0.011 | 0.003 | 0.004 | 0.0006 | 0.352 | 2.267 |
| IS 11 | 0.07 | 0.3 | 1.8 | 0.1 | 0.2 | 0.02 | 0.1 | 0.007 | 0.03 | 0.009 | 0.003 | 0.004 | 0.0007 | 0.336 | 2.860 |

12

*In Table 1, the unit of content of each component is wt%, and the remaining components are Fe and inevitable impurities. In addition, in Table 1, X represents an X value defined by relational formula 1, T represents a T value defined by relational formula 2. And CS represents Comparative Steel, IS represents Inventive Steel.

[Table 2]

| Divi sion | Steel Type | FDT | CR1st | Hold Time | MT | CR2nd | $T_E$ | Tc | $T_A$ |
|---|---|---|---|---|---|---|---|---|---|
| CE 1 | CS 1 | 885 | 68 | 0.7 | 465 | 15 | 490 | 448 | 470 |
| CE 2 | CS 2 | 862 | 65 | 0.7 | 470 | 18 | 485 | 432 | 450 |
| CE 3 | CS 3 | 865 | 70 | 0.7 | 443 | 20 | 465 | 430 | 442 |
| CE 4 | CS 4 | 860 | 69 | 0.7 | 477 | 22 | 472 | 443 | 463 |
| CE 5 | IS 1 | 873 | 58 | 0.7 | 560 | 15 | 485 | 430 | 460 |
| CE 6 | IS 1 | 866 | 75 | 0.7 | 350 | 14 | 493 | 425 | 465 |
| CE 7 | IS 1 | 866 | 115 | 0.7 | 435 | 18 | 477 | 435 | 451 |
| CE 8 | IS 1 | 872 | 20 | 0.7 | 460 | 18 | 480 | 452 | 462 |
| CE 9 | IS 1 | 880 | 78 | 4.2 | 472 | 15 | 491 | 438 | 460 |
| CE 10 | IS 1 | 876 | 86 | 0.7 | 471 | 22 | 550 | 530 | 540 |
| CE 11 | IS 1 | 855 | 58 | 0.7 | 483 | 21 | 420 | 350 | 380 |
| CE 12 | IS 1 | 884 | 60 | 0.7 | 468 | 55 | 485 | 430 | 445 |
| CE 13 | IS 1 | 890 | 62 | 0.6 | 475 | 25 | 390 | 465 | 420 |
| CE 14 | IS 1 | 878 | 60 | 0.7 | 454 | 22 | 455 | 540 | 485 |
| IE 1 | IS 2 | 873 | 72 | 0.7 | 452 | 16 | 460 | 455 | 460 |
| IE 2 | IS 3 | 887 | 75 | 0.6 | 482 | 22 | 500 | 460 | 485 |
| IE 3 | IS 4 | 892 | 65 | 0.7 | 469 | 25 | 470 | 425 | 454 |
| IE 4 | IS 5 | 874 | 62 | 0.7 | 462 | 25 | 500 | 458 | 482 |
| IE 5 | IS 6 | 891 | 64 | 0.7 | 450 | 18 | 475 | 435 | 456 |
| IE 6 | IS 7 | 888 | 60 | 0.7 | 463 | 19 | 450 | 432 | 445 |
| IE 7 | IS 8 | 885 | 69 | 0.6 | 450 | 16 | 466 | 420 | 448 |
| IE 8 | IS 9 | 892 | 82 | 0.7 | 473 | 19 | 495 | 453 | 472 |
| IE 9 | IS 10 | 892 | 82 | 0.7 | 454 | 20 | 505 | 451 | 477 |
| IE 10 | IS 11 | 885 | 72 | 0.7 | 465 | 22 | 482 | 426 | 440 |

*In Table 2, CE represents Comparative Example and IE represents Inventive Example. And CS represents Comparative Steel and IS represents Inventive Steel.

The microstructure of each hot-rolled steel sheet manufactured as described above was analyzed in detail, and was shown in Table 3 below. In this case, the microstructure was analyzed at positions 1/4 to 1/2 thick of the cross section of the steel sheet in the rolling direction. In addition, the differentiation and area fraction of the polygonal ferrite phase (PF), bainite phase (B), ferritic low-temperature transformation phase (BF), martensite phase (M), and MA phase formed in the steel sheet were measured using Electron Back Scattered Diffraction (EBSD, (JEOL JSM-7001F)) at a magnification of 3000 to 5000. In addition, the geometrical necessary dislocation (GND) was calculated using OIM analysis™ (EDAX) after EBSD measurement based on the cross-section parallel to the rolling direction at positions 1/4 thick in the hot-rolled steel sheet. Meanwhile, as shown in Table 3, in the result of observing the microstructure of the hot-rolled steel sheet in the inventive example, retained austenite was not observed.

[Table 3]

| Divisi on | Steel Type | PF | BF | B | P | M | MA | GND(x1 0$^{14}$) |
|---|---|---|---|---|---|---|---|---|
| CE 1 | CS 1 | 39 | 54 | 7 | 0 | 0 | 0 | 0.8 |

(continued)

| Divisi on | Steel Type | PF | BF | B | P | M | MA | GND(x10¹⁴) |
|---|---|---|---|---|---|---|---|---|
| CE 2 | CS 2 | 16 | 69 | 8 | 0 | 5 | 2 | 2.6 |
| CE 3 | CS 3 | 11 | 69 | 7 | 0 | 7 | 6 | 2.6 |
| CE 4 | CS 4 | 33 | 67 | 0 | 0 | 0 | 0 | 0.9 |
| CE 5 | IS 1 | 15 | 78 | 3 | 4 | 0 | 0 | 0.95 |
| CE 6 | IS 1 | 6 | 71 | 18 | 0 | 3 | 2 | 2.8 |
| CE 7 | IS 1 | 5 | 85 | 10 | 0 | 0 | 0 | 2.6 |
| CE 8 | IS 1 | 34 | 58 | 8 | 0 | 0 | 0 | 0.9 |
| CE 9 | IS 1 | 32 | 60 | 4 | 5 | 0 | 0 | 0.9 |
| CE 10 | IS 1 | 29 | 64 | 3 | 4 | 0 | 0 | 0.95 |
| CE 11 | IS 1 | 11 | 63 | 15 | 0 | 8 | 3 | 3.3 |
| CE 12 | IS 1 | 14 | 68 | 14 | 0 | 0 | 4 | 2.8 |
| CE 13 | IS 1 | 12 | 62 | 22 | 0 | 2 | 2 | 3.1 |
| CE 14 | IS 1 | 31 | 64 | 0 | 8 | 0 | 0 | 0.95 |
| IE 1 | IS 2 | 25 | 68 | 5 | 0 | 0 | 2 | 1.5 |
| IE 2 | IS 3 | 21 | 75 | 4 | 0 | 0 | 1 | 1.2 |
| IE 3 | IS 4 | 25 | 72 | 3 | 0 | 0 | 0 | 1.3 |
| IE 4 | IS 5 | 20 | 67 | 13 | 0 | 0 | 0 | 2.3 |
| IE 5 | IS 6 | 25 | 72 | 3 | 0 | 0 | 0 | 1.6 |
| IE 6 | IS 7 | 23 | 65 | 12 | 0 | 0 | 0 | 1.9 |
| IE 7 | IS 8 | 21 | 68 | 11 | 0 | 0 | 0 | 2.2 |
| IE 8 | IS 9 | 29 | 62 | 9 | 0 | 0 | 0 | 1.7 |
| IE 9 | IS 10 | 20 | 73 | 7 | 0 | 0 | 0 | 1.8 |
| IE 10 | IS 11 | 17 | 71 | 12 | 0 | 0 | 0 | 2.4 |

* In Table 3, PF refers to the polygonal ferrite phase, B refers to the bainite phase, BF refers to the ferritic low-temperature transformation phase, M refers to the martensite phase, and MA refers to the martensite and austenite phase. In addition, the geometrical necessary dislocation (GND) represents the average dislocation density. CE represents Comparative Example and IE represents Inventive Example. And CS represents Comparative Steel and IS represents Inventive Steel.

Meanwhile, Table 4 below showed the results of evaluating the mechanical properties of each hot-rolled steel sheet manufactured above.

The mechanical properties were shown for each steel sheet based on the tensile test and the HER results evaluated by changing the punching clearances to 5%, 10%, and 20%. Here, YS, TS, and T-El refer to 0.2% off-set yield strength, tensile strength, and fracture elongation, and are the results of testing the JIS No. 5 standard test specimens collected in a direction perpendicular to the rolling direction. In addition, the HER evaluation was conducted based on the JFST 1001-1996 standard. The results of the HER test in Table 4 below are an average value obtained after performed three times.

[Table 4]

| Div isi on | Steel Type | YP (MPa ) | TS (MPa ) | El (%) | HER₀ (% ) | HER (%) -5% | HER (%) -10% | HER (%) -20% | TSxHE R (Min. ) |
|---|---|---|---|---|---|---|---|---|---|
| CE 1 | CS 1 | 595 | 735 | 18 | 105 | 62 | 58 | 45 | 33075 |
| CE 2 | CS 2 | 542 | 639 | 21 | 120 | 61 | 63 | 64 | 38979 |

(continued)

| Div isi on | Steel Type | YP (MPa ) | TS (MPa ) | El (%) | HER$_0$ (% ) | HER (%) -5% | HER (%) -10% | HER (%) -20% | TSxHE R (Min. ) |
|---|---|---|---|---|---|---|---|---|---|
| CE 3 | CS 3 | 630 | 832 | 14 | 85 | 32 | 42 | 35 | 26624 |
| CE 4 | CS 4 | 466 | 580 | 21 | 136 | 71 | 95 | 78 | 39440 |
| CE 5 | IS 1 | 695 | 20 | 108 | 66 | 68 | 44 | 695 | 30580 |
| CE 6 | IS 1 | 745 | 13 | 82 | 48 | 47 | 35 | 745 | 26075 |
| CE 7 | IS 1 | 751 | 11 | 105 | 57 | 65 | 60 | 751 | 42807 |
| CE 8 | IS 1 | 709 | 19 | 107 | 62 | 64 | 55 | 709 | 38995 |
| CE 9 | IS 1 | 722 | 17 | 86 | 46 | 51 | 42 | 722 | 30324 |
| CE 10 | IS 1 | 718 | 19 | 98 | 58 | 58 | 52 | 718 | 37336 |
| CE 11 | IS 1 | 816 | 10 | 75 | 42 | 48 | 35 | 816 | 28560 |
| CE 12 | IS 1 | 775 | 13 | 84 | 51 | 58 | 41 | 775 | 31775 |
| CE 13 | IS 1 | 745 | 13 | 86 | 58 | 59 | 43 | 745 | 32035 |
| CE 14 | IS 1 | 752 | 13 | 79 | 55 | 51 | 40 | 752 | 30080 |
| IE 1 | IS 2 | 540 | 635 | 20 | 125 | 96 | 108 | 85 | 53975 |
| IE 2 | IS 3 | 556 | 662 | 20 | 115 | 95 | 100 | 90 | 59580 |
| IE 3 | IS 4 | 561 | 630 | 22 | 118 | 98 | 105 | 95 | 59850 |
| IE 4 | IS 5 | 645 | 758 | 17 | 115 | 72 | 85 | 76 | 54576 |
| IE 5 | IS 6 | 620 | 702 | 19 | 128 | 77 | 82 | 90 | 54054 |
| IE 6 | IS 7 | 642 | 730 | 18 | 119 | 81 | 91 | 84 | 59130 |
| IE 7 | IS 8 | 654 | 755 | 18 | 116 | 74 | 83 | 76 | 55870 |
| IE 8 | IS 9 | 530 | 615 | 22 | 125 | 88 | 96 | 83 | 51045 |
| IE 9 | IS 10 | 604 | 683 | 19 | 115 | 76 | 85 | 92 | 51908 |
| IE 10 | IS 11 | 720 | 818 | 15 | 118 | 73 | 75 | 70 | 57260 |

* In Table 4, CE represents Comparative Example and IE represents Inventive Example. And CS represents Comparative Steel and IS represents Inventive Steel.

As shown in Tables 1 to 4 above, it can be seen that all of the invention examples 1 to 10, whose steel composition components and manufacturing process conditions meet the scope of the present disclosure, have excellent mechanical properties.

In contrast, Comparative Examples 1 and 2 are cases in which relational formula 1 is not satisfied, and Comparative Example 1 showed high yield strength and tensile strength due to the precipitation strengthening effect because the composition of the components exceeded the suggested range of relational formula 1. In addition, the geometrical necessary dislocation in the steel microstructure was $0.9 \times 10^{14}$ m$^{-2}$, which was smaller than the suggested range of the present disclosure, and the polygonal ferrite phase was excessively formed so that the HER value was shown to be more inferior when the punching clearance was large.

Comparative Example 2 is a case where the steel components is below the suggested range of relational formula 1, and the martensite phase and MA phase were excessively formed, the geometrical necessary dislocation was high at $2.6 \times 10^{14}$ m$^{-2}$, and the HER value was inferior to the material strength.

Comparative Examples 3 and 4 are cases in which the steel components did not satisfy relational formula 2, and Comparative Example 3 is a case where the steel component exceeded the suggested range of relational formula 1. In this case, the stable strength was secured by excessive inclusion of alloy components with high hardenability, but the elongation was insufficient and the HER value was inferior. In addition, Comparative Example 4 is a case where the steel component is below the suggested range of relational formula 1, and the bainite phase was not formed in the microstructure due to the insufficient alloy components with high hardenability, and the targeted strength was not secured.

On the other hand, Comparative Examples 5 to 14 are cases in which the steel composition is within the range of the present disclosure, but are cases in which the manufacturing process conditions are outside the range of the present disclosure.

Specifically, Comparative Examples 5 and 6 are cases in which the end temperature during the primary cooling after hot rolled is outside the suggested range of the present disclosure, and Comparative Example 5 is a case where the end temperature during the primary cooling exceeds the range of the present disclosure, so the unnecessary pearlite structure was formed and the HER value was inferior. In Comparative Example 6, the end temperature during the primary cooling was below the range of the present disclosure, so the polygonal ferrite phase was insufficient, the ferritic low-temperature transformation phase formed the unnecessary MA phase within the grain, and the martensite structure were also formed at some grain boundaries, and the HER value was inferior.

Comparative Examples 7 and 8 are cases in which the cooling rate during the primary cooling was outside the suggested range of the present disclosure. Specifically, in Comparative Example 7, the cooling rate exceeded the suggested range of the present disclosure, so the polygonal ferrite phase was insufficient, and most of the microstructure was composed of the ferritic low-temperature transformation phase, and the elongation was greatly inferior. In Comparative Steel 8, the cooling rate was below the suggested range, so the fraction of the polygonal ferrite phase greatly increased, and the elongation was good, but the HER was inferior when the punching clearance was large.

Comparative Example 9 is a case where the cooling stop time after the primary cooling was longer than necessary. The fraction of the polygonal ferrite phase in the microstructure of the steel sheet increased significantly, and in addition, the unnecessary pearlite structure was formed, so the HER value was inferior when the punching clearance was small and large.

Comparative Examples 10 and 11 are cases in which the cooling end temperature during the secondary cooling was outside the proposed range of the present disclosure. Comparative Example 10 is a case where the secondary cooling end temperature exceeded the temperature range of the present disclosure, so the polygonal ferrite phase fraction increased significantly, and in addition, the unnecessary pearlite structure was formed, resulting in inferior HER value. In addition, Comparative Example 11 is a case where the temperature of the steel sheet immediately after the secondary cooling was below the range of the present disclosure, and the martensite and MA phases in the microstructure were formed unnecessarily, resulting in inferior HER value.

Comparative Example 12 is a case where the cooling rate during the secondary cooling exceeded the proposed range of the present disclosure, resulting in the excessive formation of the MA phase in the microstructures, resulting in inferior HER values. Comparative Examples 13 and 14 are cases in which the temperature of the steel sheet in the width direction immediately before coiled did not satisfy the standard of the present disclosure. Specifically, Comparative Example 13 is a case where the temperature of the edge portion of the steel sheet was below the standard of the present disclosure, and the low-temperature transformation phase including the martensite phase was excessively formed at the edge portion, so that the strength was high but the strain was insufficient and the HER was also inferior. In addition, Comparative Example 14 is a case where the temperature at the central portion of the steel sheet exceeded the standard of the present disclosure, so the pearlite structure was formed at the central portion of the steel sheet and the bainite structure was also inferior, making it difficult to distinguish it from the pearlite structure, and the HER characteristics were inferior.

Meanwhile, FIG. 1 is a graph illustrating an HER relationship according to punching clearance of Inventive Examples 1 to 10 and Comparative Examples 5 to 14 in an embodiment of the present disclosure. As illustrated in FIG. 1, in the case of the Inventive Examples 1 to 10, the tensile strength is 590 MPa or more and the $HER_0$ is 100% or more, which is superior to Comparative Examples 5 to 14, so it can be confirmed that the HER value, which is the actual burring formability, satisfies the product of the tensile strength × HER of 45,000 MPa% or more even in a wide range of punching clearances from 5 to 20%.

The exemplary embodiments in the present disclosure have been described in the detailed description of the present disclosure, but the present disclosure may be variously modified by those skilled in the art to which the present disclosure pertains without departing from the scope of the present disclosure. Therefore, the scope of the present disclosure is not construed as being limited to the embodiments described above, but should be defined by the following claims as well as equivalents thereto.

**Claims**

1.  A hot-rolled steel sheet, comprising:

    in wt%, 0.03 to 0.08% of C, 0.01 to 1.0% of Si, 1.0 to 2.0% of Mn, 0.01 to 0.1% of Sol.Al, 0.005 to 0.5% of Cr, 0.005 to 0.3% of Mo, 0.001 to 0.05% of P, 0.001 to 0.01% of S, 0.001 to 0.01% of N, 0.005 to 0.12% of Ti, 0.005 to 0.06% of Nb, 0.005 to 0.2% of V, 0.0003 to 0.003% of B, and the balance being Fe and inevitable impurities, wherein the hot-rolled steel sheet satisfies relational formula 1 and relational formula 2, and
    a microstructure includes a ferritic low-temperature transformation phase, which comprises at least one of acicular ferrite, granular bainitic ferrite, and bainitic ferrite, as a main phase, and includes less than 40% of bainite phase and polygonal ferrite phase in total, and less than 3% of the residual pearlite, martensite, retained austenite and MA phases in total, and a geometrical necessary dislocation of the microstructure satisfies a range of $1.0 \times 10^{14}$ to $2.5 \times 10^{14}$ m$^{-2}$.

$$[\text{Relational Formula 1}]$$

$$0.2 \leq X \leq 0.6$$

X = (Nb/93+Ti*/48+V/51)/(C/12+N/14)
Ti* = Ti-3.42N-1.5S

In the above relational formula 1, Nb, Ti, C, N, and S are wt% of the corresponding alloy elements, and 0 is substituted if not added.

$$[\text{Relational Formula 2}]$$

$$1.5 \leq T \leq 3.5$$

T = [Mn]+2.8[Mo]+1.5[Cr]+500[B]
In the above relational formula 2, Mn, Mo, Cr, and B are wt% of the corresponding alloy elements, and 0 is substituted if not added.

2. The hot-rolled steel sheet of claim 1, wherein a sum of area fractions of the bainite phase and the polygonal ferrite phase is 10 to 40%.

3. The hot-rolled steel sheet of claim 1, wherein an area fraction of the polygonal ferrite phase is 10% or more.

4. The hot-rolled steel sheet of claim 1, wherein an area fraction of the bainite phase is 20% or less.

5. The hot-rolled steel sheet of claim 1, wherein tensile strength is 590 MPa or more, and an HER value satisfies a product of tensile strength × HER of 45,000 MPa% or more in a range of punching clearance from 5 to 20%.

6. A manufacturing method for a hot-rolled steel sheet, comprising:

reheating a steel slab to 1150 to 1350°C, the steel slab containing, in wt%, 0.03 to 0.08% of C, 0.01 to 1.0% of Si, 1.0 to 2.0% of Mn, 0.01 to 0.1% of Sol.Al, 0.005 to 0.5% of Cr, 0.005 to 0.3% of Mo, 0.001 to 0.05% of P, 0.001 to 0.01% of S, 0.001 to 0.01% of N, 0.005 to 0.12% of Ti, 0.005 to 0.06% of Nb, 0.005 to 0.2% of V, 0.0003 to 0.003% of B, and the balance being Fe and inevitable impurities, and satisfying relational formula 1 and relational formula 2;
hot-rolling the reheated steel slab at a temperature in a range of 850 to 1150°C;
primarily cooling the hot-rolled steel sheet to a temperature in the range of 400 to 500°C at an average cooling rate of 50 to 100°C/sec;
recuperating the steel sheet to a temperature in a range of 450 to 550°C by maintaining the first-cooled steel sheet for 0.5 to 3 seconds;
secondarily cooling the recuperated steel sheet to a temperature in a range of 400 to 500°C at an average cooling rate of 1 to 30°C/sec, and then coiling the cooled steel sheet; and
cooling the coiled coil to a temperature ranging from room temperature to 200°C at an average cooling rate of 0.1 to 25°C/hour,
wherein, in at least one of the primary cooling process and the secondary cooling process, cooling is completed so that a temperature $T_E$ at both edge portions (W × 60%) of the entire width W of the steel sheet is 450 to 550°C, and a temperature $T_C$ at the central portion (W × 40%) of the width is 400 to 500°C, and as a result, an average temperature $T_A$ of the coil after coiled in the coiling is maintained in the range of 400 to 500°C.

$$[\text{Relational Formula 1}]$$

$$0.2 \leq X \leq 0.6$$

X = (Nb/93+Ti*/48+V/51)/(C/12+N/14)
Ti* = Ti-3.42N-1.5S

In the above relational formula 1, Nb, Ti, C, N, and S are wt% of the corresponding alloy elements, and 0 is substituted if not added.

[Relational Formula 2]

$$1.5 \leq T \leq 3.5$$

T = [Mn]+2.8[Mo]+1.5[Cr]+500[B]
In the above relational formula 2, Mn, Mo, Cr, and B are wt% of the corresponding alloy elements, and 0 is substituted if not added.

7.  The manufacturing method of claim 6, further comprising:
    pickling and oiling the steel sheet that is coiled after the secondary cooling.

8.  The manufacturing method of claim 6, further comprising:
    heating the pickled and oiled steel sheet to a temperature range of 450 to 740°C and then hot-dip galvanizing the pickled and oiled steel sheet.

FIG. 1

## INTERNATIONAL SEARCH REPORT

| International application No. |
| --- |
| **PCT/KR2023/095030** |

| | |
| --- | --- |
| **A.** | **CLASSIFICATION OF SUBJECT MATTER** |

**C22C 38/38**(2006.01)i; **C22C 38/02**(2006.01)i; **C22C 38/06**(2006.01)i; **C22C 38/22**(2006.01)i; **C22C 38/00**(2006.01)i; **C22C 38/28**(2006.01)i; **C22C 38/26**(2006.01)i; **C22C 38/24**(2006.01)i; **C22C 38/32**(2006.01)i; **C21D 8/02**(2006.01)i

According to International Patent Classification (IPC) or to both national classification and IPC

| | |
| --- | --- |
| **B.** | **FIELDS SEARCHED** |

Minimum documentation searched (classification system followed by classification symbols)

C22C 38/38(2006.01); C21D 8/02(2006.01); C22C 38/00(2006.01); C22C 38/14(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 열연강판(hot rolled steel), 페라이트(ferrite), 전위밀도(dislocation density), 베이니틱(bainitic), 저온변태 페라이트(low-temperature transformed ferrite)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2013-133534 A (NIPPON STEEL & SUMITOMO METAL CORP.) 08 July 2013 (2013-07-08)<br>See paragraphs [0084] and [0098]-[0100] and claims 1-4. | 1-5 |
| A | | 6-8 |
| A | JP 2015-054983 A (JFE STEEL CORP.) 23 March 2015 (2015-03-23)<br>See paragraph [0036] and claims 1-2. | 1-8 |
| A | KR 10-1728789 B1 (JFE STEEL CORPORATION) 20 April 2017 (2017-04-20)<br>See claims 1 and 4-5. | 1-8 |
| A | JP 2008-255484 A (KOBE STEEL LTD.) 23 October 2008 (2008-10-23)<br>See claims 1-4. | 1-8 |
| A | JP 2001-020030 A (KOBE STEEL LTD.) 23 January 2001 (2001-01-23)<br>See claims 1 and 4. | 1-8 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 October 2023** | **18 October 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/095030**

| Patent document cited in search report | | | Publication date (day/month/year) | Patent family member(s) | | | Publication date (day/month/year) |
|---|---|---|---|---|---|---|---|
| JP | 2013-133534 | A | 08 July 2013 | JP | 5741426 | B2 | 01 July 2015 |
| JP | 2015-054983 | A | 23 March 2015 | JP | 6015602 | B2 | 26 October 2016 |
| KR | 10-1728789 | B1 | 20 April 2017 | BR | 112015023632 | A2 | 18 July 2017 |
| | | | | BR | 112015023632 | B1 | 28 April 2020 |
| | | | | CN | 105121684 | A | 02 December 2015 |
| | | | | CN | 105121684 | B | 15 March 2017 |
| | | | | EP | 2949772 | A1 | 02 December 2015 |
| | | | | EP | 2949772 | B1 | 19 June 2019 |
| | | | | JP | 5679091 | B1 | 04 March 2015 |
| | | | | JP | WO2014-162680 | A1 | 16 February 2017 |
| | | | | KR | 10-2015-0122779 | A | 02 November 2015 |
| | | | | US | 10287661 | B2 | 14 May 2019 |
| | | | | US | 2016-0017466 | A1 | 21 January 2016 |
| | | | | WO | 2014-162680 | A1 | 09 October 2014 |
| JP | 2008-255484 | A | 23 October 2008 | CN | 101265553 | A | 17 September 2008 |
| | | | | CN | 101265553 | B | 19 January 2011 |
| | | | | GB | 2448114 | A | 08 October 2008 |
| | | | | GB | 2448114 | B | 12 May 2010 |
| | | | | JP | 5172403 | B2 | 27 March 2013 |
| | | | | KR | 10-0987877 | B1 | 13 October 2010 |
| | | | | KR | 10-2008-0084667 | A | 19 September 2008 |
| | | | | US | 2008-0223491 | A1 | 18 September 2008 |
| | | | | US | 8052808 | B2 | 08 November 2011 |
| JP | 2001-020030 | A | 23 January 2001 | None | | | |

Form PCT/ISA/210 (patent family annex) (July 2022)

**EP 4 560 044 A1**

## REFERENCES CITED IN THE DESCRIPTION

### Patent documents cited in the description

- JP 6293910 A
- KR 101114672
- KR 20130080038